Europäisches Patentamt

European Patent Office

Office européen des brevets

(19)

(11) Veröffentlichungsnummer: **0 173 115**
**B1**

(12) **EUROPÄISCHE PATENTSCHRIFT**

(45) Veröffentlichungstag der Patentschrift:
27.09.89

(51) Int. Cl.⁴: **F 16 K 31/06, F 16 K 1/48**

(21) Anmeldenummer: **85109763.4**

(22) Anmeldetag: **02.08.85**

(54) **Magnetventil für die Vakuumanwendung.**

(30) Priorität: **23.08.84 DE 3431037**

(43) Veröffentlichungstag der Anmeldung:
**05.03.86 Patentblatt 86/10**

(45) Bekanntmachung des Hinweises auf die Patenterteilung:
**27.09.89 Patentblatt 89/39**

(84) Benannte Vertragsstaaten:
**CH DE FR GB LI NL**

(56) Entgegenhaltungen:
**EP-A- 0 089 563**
**CH-A- 114 339**
**US-A- 2 829 861**
**US-A- 3 134 932**
**US-A- 3 552 714**

(73) Patentinhaber: **LEYBOLD AKTIENGESELLSCHAFT,**
**Bonner Str. 504, D-5000 Köln 51 (DE)**

(72) Erfinder: **Contzen, Franz-Peter, Erlenweg 69,**
**D-5000 Köln 30 (DE)**
Erfinder: **Jokisch, Gerhard, Markusstrasse 121,**
**D-5000 Köln 51 (DE)**
Erfinder: **Vittori, Francesco, Kierberger Strabe 45,**
**D-5000 Köln 51 (DE)**

(74) Vertreter: **Leineweber, Jürgen, Dipl.-Phys.,**
**Nagelschmiedshütte 8, D-5000 Köln 40 (DE)**

## Beschreibung

Die Erfindung bezieht sich auf ein Magnetventil für die Vakuumanwendung mit einem vakuumdichten, zwei Anschlussöffnungen aufweisenden Gehäuse, mit einem Magnetantrieb, der eine ausserhalb des Gehäuses angeordnete Spule und einen innerhalb des Gehäuses angeordneten Anker umfasst, mit einem am Anker befestigten Ventilstempel, mit einem vom Ventilstempel getragenen, einer der Anschlussöffnungen zugeordneten Ventilteller und mit einer Verbindung zwischen dem Ventilstempel und dem Ventilteller, welche eine kopfartige Gestaltung an dem einen der beiden Bauteile und einen umgebördelten, den Kopf umfassenden Rand am anderen Bauteil umfasst.

Vakuumventile erfordern allgemein ein dicht abgeschlossenes Gehäuse, da das Druckverhältnis zwischen dem Atmosphärendruck und dem Druck im Innenraum des Ventils häufig neun Zehnerpotenzen und mehr beträgt. Des weiteren muss insbesondere bei Vakuumventilen mit grösseren Nennweiten die Verbindung zwischen Stempel und Teller so gestaltet sein, dass geringfügige Schwenkbewegungen des Tellers möglich sind, um eine gleichmässige Verteilung der Anpresskraft über die Dichtfläche zu erzielen. Schliesslich sind Vakuumventile extrem empfindlich gegen Verunreinigungen. Bereits geringe Mengen staubförmiger Verunreinigungen auf den Dichtflächen können die Dichtqualität des Ventils wegen der hohen Druckverhältnisse erheblich beeinträchtigen.

Bekannt und üblich ist deshalb die Verwendung eines Federbalges, der den nach aussen aus dem Gehäuse herausgeführten Ventilstempel umgibt und am Ventilteller angeschweisst sowie am Ventilgehäuse mittels statischer Dichtungen abgedichtet ist. Die Verwendung eines derartigen Federbalges hat ausser der Abdichtung des Innenraumes den Vorteil, dass ein im Bereich der Anpassungsbewegungen zulassenden Verbindung zwischen dem Ventilstempel und dem Ventilteller entstehender Abrieb nicht in den Ventilinnenraum und damit auf die Dichtflächen am Ventilsitz und Ventilteller gelangen kann.

Bei Magnetventilen hat die Verwendung von Federbälgen allerdings einige Nachteile. Zum einen besteht die Notwendigkeit, relativ gross dimensionierte Magnetantriebe einzusetzen, um die Zusatzkräfte, die infolge des einseitig mit Atmosphärendruck beaufschlagten Federbalges auf den Teller einwirken, überwinden zu können. Des weiteren besteht bei Magnetventilen der generelle Nachteil sehr harter Anschläge, die um so härter sind, je grösser der Magnetantrieb dimensioniert ist. Diese Anschläge führen zu einem schnellen Verschleiss des Federbalges, so dass Magnetventile mit Federbälgen nur eine begrenzte Lebensdauer haben.

Es ist deshalb bekannt, Magnetventile in voll gekapselter Ausführung, d.h. stopfbuchslos und federbalglos, auszubilden, so dass kleinere Magnetantriebe eingesetzt werden können. Bei dieser Ausführungsform befinden sich u.a. der Ventilstempel und der Ventilteller und damit auch ihre Verbindung im Gehäuseinnenraum, d.h. im Vakuum. Ist diese Verbindung so gestaltet, dass sie Anpassungsbewegungen zulässt, dann ist ein wenn auch geringfügiger Abrieb unvermeidbar. Dieser Abrieb gelangt auf die Dichtflächen und beeinträchtigt die Dichtqualität. Bei einer bekannten Ausführung (interner Stand der Technik der Anmelderin) ist am Ventilteller ein umgebördelter Rand vorgesehen, der das kopfartig gestaltete freie Ende des Ventilstempels umfasst, so dass Anpassungsbewegungen des Ventiltellers möglich sind. Zusätzlich steht der Ventilteller unter der Wirkung einer zwischen dem Teller und dem Gehäuse angeordneten Spiralfeder, so dass die Verbindung Teller/Stempel federbelastet ist. Nicht nur infolge der Anpassungsbewegungen des Ventiltellers, sondern auch wegen der von der Spiralfeder auf den Teller ausgeübten Drehmomente entsteht im Laufe einiger tausend Schaltungen ein Abrieb, der die Dichtheit des Ventils beeinträchtigt. Darüber hinaus kann der Abrieb zu einer Öffnung der Umbördelung führen, wodurch die federbelastete Verbindung Teller/Stempel aufgeht und das Ventil unbrauchbar wird.

Zum Stand der Technik gehört auch der Inhalt der US-A 3 552 714, in der ein Ventil beschrieben wird, das typischerweise dem Absperren von heissem oder kaltem Wasser dient. Der Ventilstempel ist an seinem freien Ende mit einem topfförmigen Passstück ausgerüstet, das einen Dichtring trägt. Zur Befestigung des Passstückes am Ventilstempel befindet sich innerhalb einer am Ventilstempel vorgesehenen Nut ein Federring, der das Passstück klemmend trägt. Die Dimensionen der Nut und des Federringes sind so gewählt, dass das Passstück frei drehbar, nicht aber axial verschiebbar am Stempel gehaltert ist. Probleme der beschriebenen Art, wie sie bei Magnetventilen auftreten, sind bei Wasserventilen nicht vorhanden.

Der vorliegenden Erfindung liegt die Aufgabe zugrunde, für ein Magnetventil der eingangs genannten Art eine verbesserte Verbindung zwischen Stempel und Ventilteller zu schaffen.

Erfindungsgemäss wird diese Aufgabe dadurch gelöst, dass zwischen dem Kopf und dem umgebördelten Rand ein Dichtring angeordnet ist, dass der Kopf halsseitig mit einer den Dichtring aufnehmenden Nut versehen ist und dass der mittels des Dichtringes vom Innenraum getrennte Raum ein Schmiermittel enthält. Bei einer in dieser Weise ausgebildeten Verbindung berühren sich der Kopf und der umgebördelte Rand nicht mehr unmittelbar, so dass in diesem Bereich ein den Betrieb des Ventils störender Abrieb nicht mehr entstehen kann. Der Dichtring lässt geringfügige Schwenkbewegungen zur Anpassung des Ventiltellers an seinen Ventilsitz zu. Des weiteren begrenzt der Dichtring einen vom Innenraum des Ventils abgeschlossenen Raum, so dass ein in diesem Raum entstehender Abrieb nicht nach aussen gelangen und die Dichtqualität des Ventils beeinträchtigen kann. Darüber hinaus wird der in diesem Raum entstehende Abrieb dadurch vermieden bzw. weitestgehend verhindert, dass sich darin ein Schmiermittel befindet. In diesem Fall hat der Dichtring zusätzlich die Aufgabe, das Austreten des Schmiermittels in den Innenraum des Ventils zu verhindern. Schliesslich dämpft der Dichtring die Übertragung der ruckartigen Bewegungen des Ankers auf den Ventilteller und trägt damit zusätzlich zur Verlängerung der Lebensdauer bei.

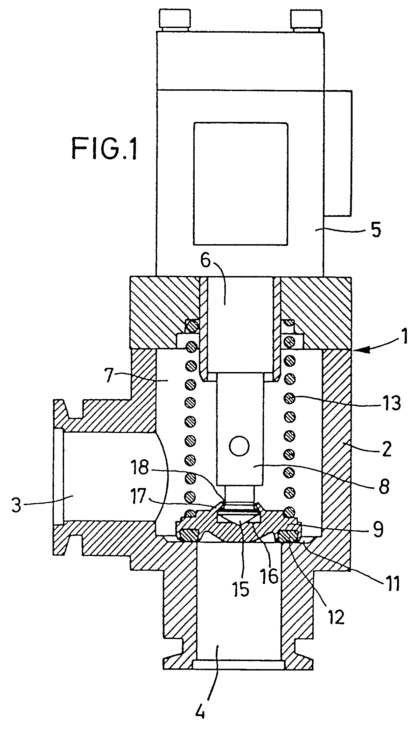

Weitere Vorteile und Einzelheiten der Erfindung sollen anhand von in den Fig. 1 bis 3 dargestellten Ausführungsbeispielen erläutert werden.

Das in Fig. 1 dargestellte Magnetventil 1 umfasst das Gehäuse 2 mit den Anschlussöffnungen 3 und 4 sowie den generell mit 5 bezeichneten Magnetantrieb. Die im einzelnen nicht dargestellte Spule des Magnetantriebs befindet sich ausserhalb des Gehäuses 2, während der teilweise dargestellte Anker 6 sich im Innenraum 7 des Gehäuses 2 befindet. Eine vakuumdichte Ausführung des Gehäuses 2 ist dadurch möglich.

Am Anker 6 ist der Ventilstempel 8 befestigt, welcher seinerseits mit seinem freien Ende den Ventilteller 9 trägt. Der Ventilteller 9 ist der Anschlussöffnung 4 zugeordnet, die von einem Ventilsitz 11 umgeben ist. Auf der dem Ventilsitz 11 zugewandten Seite weist der Ventilteller 9 einen Dichtring 12 auf der im dargestellten geschlossenen Zustand des Ventils dem Sitz 11 anliegt. Der Erzeugung der erforderlichen Dichtkräfte dient die Spiralfeder 13, die zwischen dem Teller 9 und dem Gehäuse 2 angeordnet ist.

Zur Halterung des Ventiltellers 9 am Ventilstempel 8 ist eine Verbindung vorgesehen, die geringfügige Schwenkbewegungen des Ventiltellers 9 relativ zum Ventilstempel 8 zulässt. Dazu weist der Ventilstempel 8 an seinem unteren Ende eine kopfförmige Gestaltung (Kopf 15) auf. Diesem Kopf 15 ist am Ventilteller 9 eine Aussparung 16 mit einem hervorstehenden Rand 17 zugeordnet. Der umgebördelte Rand 17 umfasst den Kopf 15, so dass eine sichere, Anpassungsbewegungen des Ventiltellers zulassende Verbindung zwischen dem Ventilstempel 8 und dem Ventilteller 9 besteht.

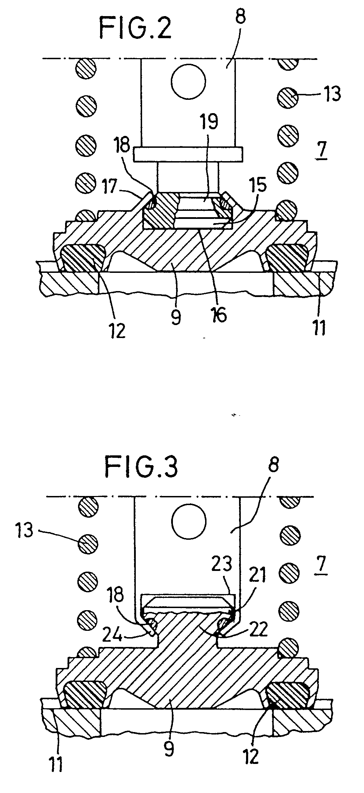

Fig. 2 zeigt eine vergrösserte Darstellung der Verbindung zwischen Ventilstempel 8 und Ventilteller 9 gemäss Fig. 1. Zwischen dem umgebördelten Rand 17 und dem Kopf 15 befindet sich der erfindungsgemässe Dichtring 18. Zur teilweisen Aufnahme des Dichtringes 18 ist im sich halsseitig verjüngenden Bereich des Kopfes 15 eine Nut 19 vorgesehen.

Infolge des Vorhandenseins des Dichtringes 18 bildet die Aussparung 16 einen vom Ventilinnenraum 7 getrennten Raum, der für die Einbringung eines Schmiermittels geeignet ist. Dieses Schmiermittel verhindert weitgehend die Entstehung eines Abriebs zwischen dem Kopf 15 und dem Ventilteller 9. Der Dichtring 18 vermeidet das Austreten des Schmiermittels. Infolge des zwischen dem umgebördelten Rand 17 und dem Kopf 15 liegenden Ringes 18 berühren diese beiden Teile einander nicht mehr, so dass ein störender Abrieb in diesem Bereich nicht mehr entsteht. Schliesslich bewirkt der Dichtring 18 eine Dämpfung der Übertragung der ruckartigen Bewegungen des Ventilstempels 8 auf den Ventilteller 9.

Fig. 3 zeigt eine Ausführungsform, bei der die die Verbindung zwischen Ventilstempel 8 und Ventilteller 9 bewirkenden Bauteile vertauscht sind. Bei diesem Ausführungsbeispiel ist der Ventilteller 9 mit einem Kopf 21 ausgerüstet, der halsseitig die Nut 22 für den Dichtring 18 aufweist. Der Ventilstempel 8 ist mit der Aussparung 23 und dem Rand 24 ausgerüstet, der umgebördelt den Kopf 21 umfasst. In der mittels des Dichtringes 8 vom Innenraum des Ventils 7 getrennten Aussparung 23 ist das Schmiermittel untergebracht.

Der Kopf 15, 21 wird im wesentlichen jeweils von einem zentralen zylindrischen Abschnitt und von zwei konischen Abschnitten gebildet. Der umgebördelte Rand 17, 24 erstreckt sich jeweils parallel zum halsseitig gelegenen konischen Abschnitt des Kopfes, in welchem die Nut 19 bzw. 22 eingelassen ist.

## Patentansprüche

1. Magnetventil für die Vakuumanwendung
- mit einem vakuumdichten, zwei Anschlussöffnungen (3, 4) aufweisenden Gehäuse (2),
- mit einem Magnetantrieb (5), der eine ausserhalb des Gehäuses angeordnete Spule und einen innerhalb des Gehäuses angeordneten Anker (6) umfasst,
- mit einem am Anker befestigten Ventilstempel (8),
- mit einem vom Ventilstempel getragenen, einer der Anschlussöffnungen zugeordneten Ventilteller (9) und
- mit einer Verbindung zwischen dem Ventilstempel (8) und dem Ventilteller (9), welche eine kopfartige Gestaltung (Kopf 15, 21) an dem einen der beiden Bauteile und einen umgebördelten, den Kopf umfassenden Rand (17, 24) am anderen Bauteil umfasst, dadurch gekennzeichnet, dass
- zwischen dem Kopf (15, 21) und dem umgebördelten Rand (17, 24) ein Dichtring (18) angeordnet ist,
- der Kopf (15, 21) halsseitig mit einer den Dichtring (18) aufnehmenden Nut (19, 22) versehen und
- der mittels des Dichtringes (18) vom Innenraum (7) getrennte Raum (16, 23) ein Schmiermittel enthält.

2. Magnetventil nach Anspruch 1, dadurch gekennzeichnet, dass der Kopf (15) am Ventilstempel (8) und der umgebördelte Rand (17) am Ventilteller (9) vorgesehen sind.

## Claims

1. Solenoid valve for vacuum application with a vacuum-tight housing (2), which comprises two connection holes (3, 4), with a solenoid drive (5), which comprises a coil arranged outside the housing and an armature (6) arranged inside the housing, with a valve push rod (8), which is secured to the armature, with a valve disc (9), which is carried by the valve push rod and associated with one of the connection holes, and with a connection between the valve push rod (8) and the valve disc (9), which connection comprises a headlike structure (head 15, 21) on one of the two components and a flanged edge (17, 24), surrounding the head, on the other component, characterised in that a sealing ring (18) is arranged between the head (15, 21) and the flanged edge (17, 24), that the head (15, 21) is provided on the neck side with a groove (19, 22) which accommodates the sealing ring (18) and that the space (16, 23) separated from the interior space (7) by means of the sealing ring (18) contains a lubricant.

2. Solenoid valve according to claim 1, characterised in that the head (15) is provided on the valve push rod (8) and the flanged edge (17) on the valve disc (9).

**Revendications**

1. Electrovanne pour application à vide, possédant un corps (2) étanche au vide avec deux ouvertures de raccordement (3, 4), un mécanisme électromagnétique (5) composé d'une bobine disposée en dehors du corps et d'un induit (6) situé à l'intérieur du corps, une tige de vanne (8) fixée à l'induit, un disque de vanne (9) porte par la tige de vanne et tournée vers l'une des deux ouvertures de raccordement, et une liaison entre la tige de vanne (8) et le disque de vanne (9), composée d'une pièce en forme de tête (tête 15, 21) sur l'une des deux pièces et un bord roulé (17, 24) entourant la tête sur l'autre pièce, caractérisé en ce qu'il existe un joint d'étanchéité (18) entre la tête (15, 21) et le bord roulé (17, 24), en ce que la tête (15, 21) porte du côté du cou une rainure (19, 22) recevant le joint d'étanchéité (18) et en ce que la chambre (16, 23) séparée de l'intérieur de la vanne (7) par le joint d'étanchéité (18) contient un lubrifiant.

2. Electrovanne selon la revendication 1, caractérisée en ce que la tête (15) est placée sur la tige de vanne (8) et le bord roulé (17) sur le disque de vanne (9).

FIG.1

# FIG.2

# FIG.3